# EUROPEAN PATENT SPECIFICATION

(11) **EP 1 017 525 B1**
(45) Date of publication and mention of the grant of the patent: **27.11.2002**
(21) Application number: 98939849.0
(22) Date of filing: 24.08.1998
(51) Int. Cl.: B23B 27/04, B23B 29/12

(54) **INSERT HOLDER AND KEY FOR INSERT HOLDERS**
SCHNEIDEINSATZHALTER UND SCHLÜSSEL FÜR SCHNEIDEINSATZHALTER
SUPPORT D'INSERTS ET CLE POUR SUPPORTS D'INSERTS

(30) Priority: 24.09.1997 SE 9703433
(43) Date of publication of application: 12.07.2000
(73) Proprietor: SANDVIK AKTIEBOLAG, 811 81 Sandviken (SE)
(72) Inventor: HANSSON, Per, S-805 96 Gävle (SE); BRASK, Karl-Göran, S-811 30 Sandviken (SE)
(86) International application number: SE9801508
(87) International publication number: WO99015296

(56) References cited:
- EP-A1- 0 654 316
- WO-A1-95/13892
- US-A- 4 588 333
- US-A- 4 801 224

## Description

### Technical Field of the Invention

In a first aspect this invention relates to an insert holder of the type comprising a blade-shaped body having a slot adapted to receive a cutting insert, said slot being defined by an elastically flexible arm arranged to resiliently clamp the cutting insert in the slot, two seats, which open laterally, being provided in said insert holder one in the clamping arm (4) and the other located in the body (1), said seats to receive two spaced-apart projections of a key, said projections having the function of bending the clamping arm outwards and widening the slot in connection with the mounting or dismounting of the cutting insert, more precisely by turning the key around a fulcrum defined by one of the seats and a projection of the key engaging said seat at the same time as the other projection engages the other seat.

In a second aspect the invention also relates to a key for such insert holders.

### Prior Art

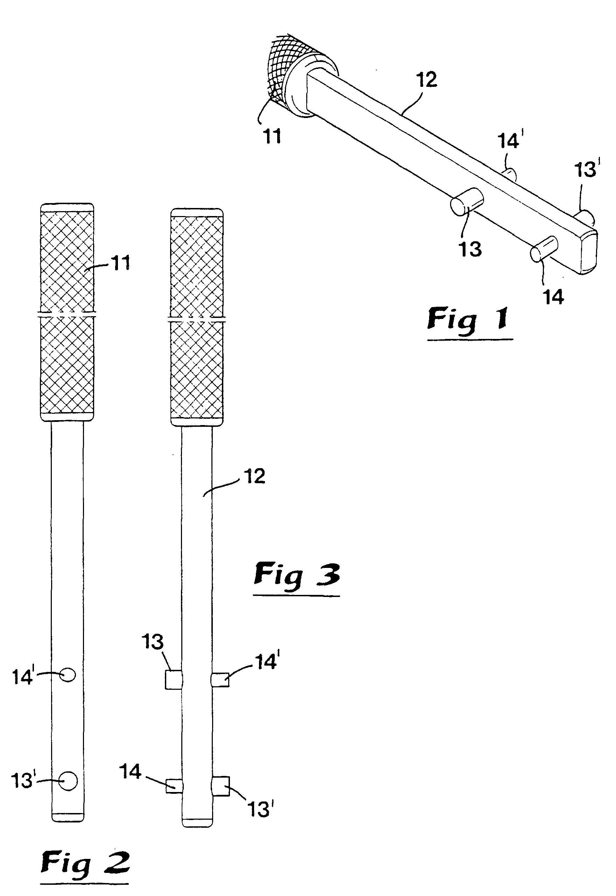

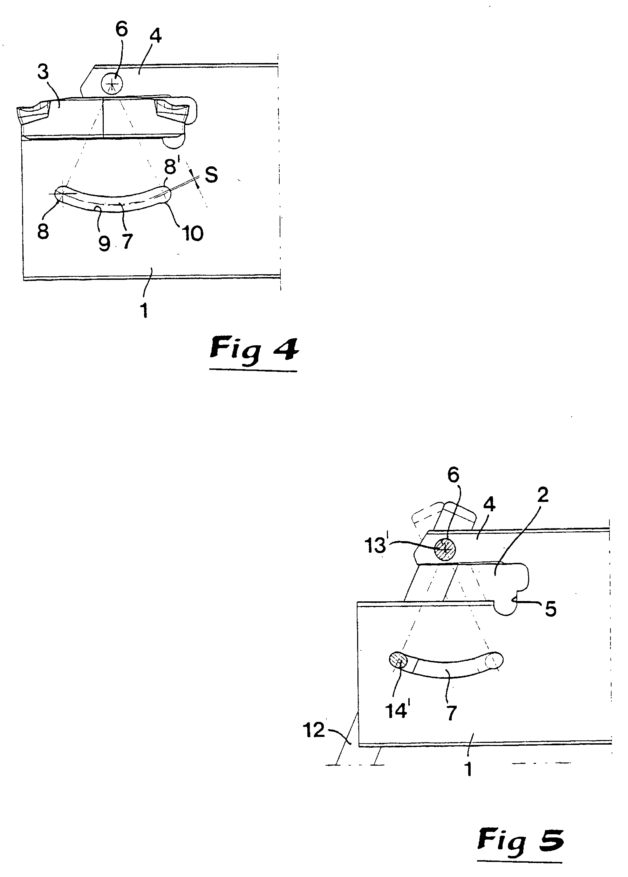

Insert holders and keys of the type generally defined above are previously known in two different embodiments in EP 0 654 316. Thus, in figures 1-4 of said document an insert holder is shown having one of its seats recessed in the flexible clamping arm while the other seat is recessed in the body itself, more precisely in a point below the slot intended for the cutting insert. In order to widen the slot of this insert holder two types of keys are suggested, the first one being shown in figure 3 and having the shape of a plate with two separated legs upon which projections in the shape of studs are provided, and between said projections there is a wedge body that by the aid of a screw mechanism may increase or decrease the distance between the legs and consequently the distance between said studs. In figure 4 an alternative of the key is shown where one projection is constituted by a rotatable eccentric body that, when turned, is able to increase the distance between the seats of the insert holder in order to bend the clamping arm outwards. However, both of these keys are structurally relatively complicated and hence expensive to manufacture.

The presence of a screw mechanism also constitutes a latent risk for functional incompetence, e.g. by damaging or fouling of the threads of the mechanism.

A key of the type generally defined above is previously known from US 4,588,333 wherein the key comprises a shaft having two axially, spaced-apart projections but this key is designed to operate directly against a rear surface of a cutting insert forcing it out of the supporting slot. A serious disadvantage with this solution is that the repeated mounting and dismounting of the cutting insert causes rapid wear of the contact surfaces of the slot which in turn means a tool holder incapable of providing adequate clamping and positioning of the insert.

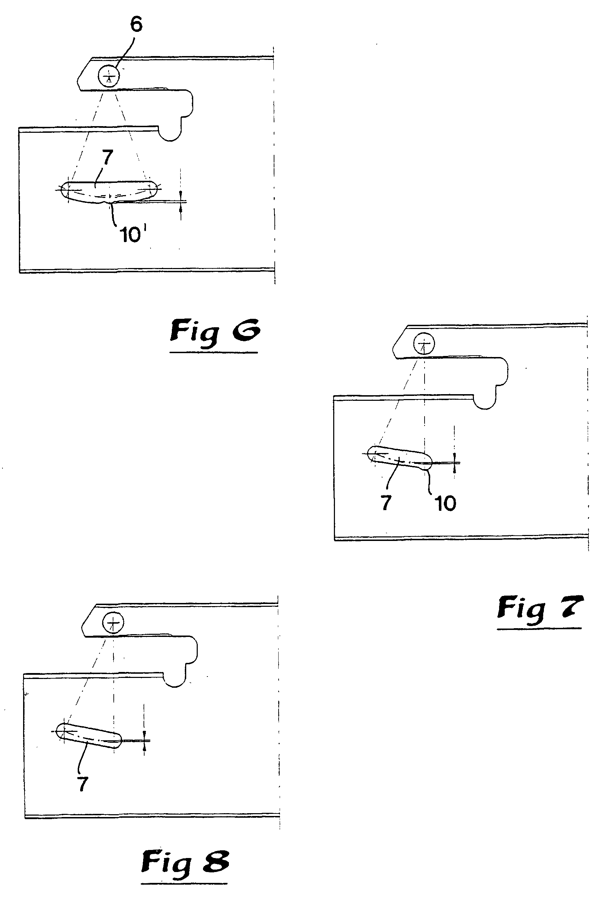

A structurally more simple and hence cheaper key is described in connection with figures 6-8 of the document. In this case two cylindrical studs are fixed upon an elongated shaft, more precisely side by side in absolute vicinity of the free end of the shaft. In connection with this key the maximum distance between the studs is determined by the width of the key shaft, said distance being relatively short and thus no stud receiving seat may be provided in the body itself in the area below the slot intended for the insert. Accordingly, one of these two studs must be applied against an abutment or in a seat in the absolute vicinity of the clamping arm. A disadvantage of this key, which in itself is simple and cheap, is, however, that it requires continuous power supply in order to maintain the arm bent outwards. In other words the clamping arm returns to its starting position as soon as the key is released. Another disadvantage is that a large manual force is required to bend the clamping arm outwards since the distance between the studs is small. A serious disadvantage is also that the bending outwards of the clamping arm takes place in an uncontrolled way. If the operator applies an excessive force upon the clamping arm, said arm may be plastically deformed and thus unusable.

### Objects and Features of the Invention

The present invention aims at overcoming the disadvantages mentioned above in connection with prior art and to create an improved combination of insert holder and key. Thus, a primary object of the invention is to create an insert holder and a key in combination with each other guarantee a predictable deflection or bending of the clamping arm while using a reasonable manual force simultaneously as the key should be structurally simple and cheap to manufacture. A further object is to create an insert holder and a key which makes it possible to automatically maintain the key in a condition where the clamping arm is kept deflected, i.e. without applying a manual force to the key.

According to the invention at least the primary object is achieved by means of the features being defined in the characterising portions of claims 1 and 5. Preferred embodiments of the invention are defined in the dependent claims.

### Brief Description of the Appended Drawings

In the drawings:
- Figure 1: is a partial perspective view of a key according to an embodiment of the invention,
- Figure 2: is a side view of an alternative embodiment of the key according to the invention,
- Figure 3: is an analogous side view turned 90°,
- Figure 4: is a partial side view showing an insert holder of blade type and the adherent cutting insert,
- Figure 5: is a side view corresponding to figure 4, said side view showing the same insert holder without cutting insert but with an applied key, and
- Figure 6-8: are similar side views showing three further alternative embodiments of the insert holder according to the invention.

### Detailed Description of Preferred Embodiments of the Invention

Reference is first made to figures 4 and 5 illustrating an insert holder having the shape of or comprising a blade-shaped body 1, an outwardly opening slot or recess 2 being provided in said body 1, said slot or recess 2 being adapted to receive a cutting insert 3. The slot 2 is defined by, on one hand, a lower and forward portion of the body 1, and on the other hand, by an elastically flexible arm 4 having the function of clamping the cutting insert 3 in the slot 2. At the inner end of the slot 2 there is an abutment surface 5 against which the cutting insert abuts when mounted.

In the insert holder two different seats 6, 7 are provided, which may either be designed as through holes or as recesses having a limited depth and opening only at one side of the body. One of the seats 6 is cylindrical and in the disclosed embodiment located in the clamping arm 4. The other seat 7 is located in the area below the slot 5, said other seat 7, in accordance with the present invention, having an oblong shape. In the embodiment according to figures 4 and 5 the seat 7 is arched in shape and extends between opposite ends designated by 8, 8', which are located at different distances from the seat 6. More specifically, the seat or the notch is limited by a lower arc-shaped surface 9 that at the end 8' is converted into a shallow recess 10. The notch 7 is located in such a way that the radial distance from the bottom of said recess 10 is somewhat smaller than the radial distance between the seat 6 and the bottom surface 9 at the end 8. The difference in distance or radius, indicated by the designation S in figure 4, may in practice constitute fractions of a millimetre. For instance, the difference in distance S may be within the interval 0,2 - 1,0 mm, preferably 0,3 - 0,7 mm.

Reference is now made to figures 1-3 illustrating two alternative embodiments of a lever key according to the invention. Generally, said key comprises a handle member 11 and a shaft 12 having at least a pair of axially spaced projections 13, 14. The only difference between the embodiment according to figure 1 and the embodiment according to figures 2 and 3 is that the shaft, in the first case, has a rectangular cross-section, i.e. the shaft is flat, while the shaft according to figures 2 and 3 is cylindrical.

The first projection 13 on the shaft 12 has the shape of a cylindrical stud whose diameter is only a little smaller than the diameter of the cylindrical seat 6. This means that the stud 13 projects at a right angle from the shaft 12. However, in this case the cross-section of the stud may be oval or elliptic, more precisely in such a way that the major axis of the ellipse is oriented perpendicular to the longitudinal axis of the shaft. By this oval or elliptic shape of the stud surface contact rather than line contact is established against the bottom surface 9 when the stud is applied in the notch 7; what facilitates the displacement of the stud along the bottom surface 9.

The distance between the two studs 13 and 14 should on one hand be larger than 1/10 of the entire length of the shaft and on the other hand smaller than 1/3 of the entire length of the shaft. Per se both the length of the shaft as well as the distance between the studs may vary depending on which type of insert holder that is to be treated. However, the length of the shaft should be in the range of 100-200 mm and the distance between the studs may be within the range of 20-60 mm.

In accordance with a preferred embodiment of the invention opposite pairs of projections are provided on the shaft 12. At the side of the shaft that is opposite to the cylindrical stud 13 there is an oval stud 14' and in an analogous way there is a cylindrical stud 13' at the side of the shaft that is opposite to the oval stud 14.

In figure 5 is shown how the key is attached to the insert holder 1, more precisely with the cylindrical stud 13' mounted in the cylindrical seat 6 and the oval stud 14' engaging the arc-shaped notch 7. Thus, in this case the key is oriented downwards from the insert holder. If the operator wishes to direct the key upwards from the insert holder, said key may be oriented in such a way that the stud 13 at the opposite side of the shaft engages the cylindrical seat 6 and the oval stud 14 engages the notch 7. From the starting position shown in figure 5 the key shaft is brought to turn counter-clockwise around the fulcrum defined by the seat 6 and the stud 13'. Hereby the projection 14' is moved from one end 8 of the notch 7 to the opposite end 8', whereby the stud glides along the bottom surface 9. Due to the fact that the notch is so oriented relative to the seat 6 that the radial distance to the seat 6 is shortened successively in direction towards the end 8', the elastically flexible clamping arm 4 will successively bend outwards far enough to allow the insert 3 to be removed from the slot 2. When the stud 14' reaches the end position at the end 8' of the notch it will be positioned in the recess 10, this arrangement guaranteeing that the key is automatically maintained in its inner end position. In other words the operator does not need to apply any force upon the key to keep the clamping arm 4 bent outwards. Therefore, it is not necessary to actuate the key until a new (or indexed) insert is introduced into the slot and the clamping arm again is to be actuated. It should be pointed out that the radial distance between the seat 6 and the recess 10 is somewhat larger than the corresponding distance from the bottom surface 7 in the absolute vicinity of the recess. Nevertheless the radial distance between the recess and the seat 6 is obviously smaller than the corresponding radial distance at the opposite end 8 of the notch.

In figure 6 an alternative embodiment of the insert holder is shown, the oblong seat or notch 7 in its bottom surface having a central bowl-like shoulder surface 10' located at a radial distance from the seat 6, said distance being at least somewhat smaller than the corresponding radial distance at the opposite ends of the notch. In this case the key may thus be turned inwards from either one of the two opposite ends of the notch and effect bending outwards of the clamping arm when the stud reaches the shoulder surface 10'.

In figures 7 and 8 are shown examples of straight notches, the notch according to figure 7 including a recess at one end thereof, while the notch according to figure 8 is void of a special, position-maintaining recess.

In practice the geometric shape of the oblong seat may be varied in many ways. Thus, essential for the invention is only that said seat generally has an oblong shape and that the radial distance between on one hand the fulcrum defined by a cylindrical seat and a first projection and on the other hand the surface of the seat abutting the second projection is shortened when the second projection is displaced along a running surface of the seat. Although it is preferred to locate the fulcrum seat in the clamping arm and the oblong seat in the body of the insert holder, as is shown in the drawings, it is per se feasible to arrange this in a reversed way, i.e. locate the oblong seat in the clamping arm and the fulcrum seat in the body.

## Claims

1. Insert holder comprising a blade-shaped body (1) having a slot (2) adapted to receive a cutting insert (3), said slot (2) being defined by an elastically flexible arm (4) arranged to resiliently clamp the cutting insert in the slot, two seats (6, 7), which open laterally, being provided in said insert holder one in the clamping arm (4) and the other located in the body (1), said seats arranged to receive two spaced-apart projections (13, 14; 13', 14') of a key, said projections having the function of bending the clamping arm outwards and widening the slot in connection with the mounting or dismounting of the cutting insert, more precisely by turning the key around a fulcrum defined by one of the seats (6) and a projection (13; 13') of the key engaging said seat (6) at the same time as the other projection (14, 14') engages the other seat (7), **characterized in that** said other seat (7) has an oblong shape in order to effect bending outwards of the clamping arm (4) by displacing the other projection (14, 14') of the key from a point located at a certain distance from the first seat (6) to another point located at a shorter distance from said first seat (6).

2. Insert holder according to claim 1, **characterized in that** the oblong seat (7) has a recess (10) at a point located at a shortened distance from the first seat (6), said other projection (14, 14') being maintained in said recess (10) when the shaft (12) of the key is turned to an active position where the clamping arm is bent outwards.

3. Insert holder according to claim 1 or 2, **characterized in that** the oblong seat (7) is recessed in the body (1), while the fulcrum-defining seat (6) is recessed in the clamping arm (4).

4. Insert holder according to any of the preceding claims, **characterized in that** the oblong seat (7) has its two opposite ends located at different distances from the seat serving as a fulcrum.

5. Key to be used to enable the mounting and/or dismounting of a cutting insert in a slot in an insert holder of the kind including a blade-shaped body (1), said key comprising a shaft (12) having two axially, spaced-apart projections (13, 14; 13', 14') a first projection (13', 14) being located close to a free end of the shaft and a second projection (13, 14') being axially spaced from said first projection, and that the distance between the projections being larger than 1/10 and smaller than 1/3 of the entire length of the shaft, **characterized in that** and that the projection (13, 13') designed to act as the fulcrum has the form of a cylindrical stud, while the other projection (14, 14') has the form of a stud having an oval cross-section.

6. Key according to claim 5, **characterized in that** opposite pairs of projections are provided on the shaft, namely, located at one side, a pair in the shape of a cylindrical stud (13') closest to the free end of the shaft and an oval stud (14') at a distance from said cylindrical stud (13'), and, located at the other side, a pair in the shape of an oval stud (14) closest to the free end of the shaft and a cylindrical stud (13) at a distance from said oval stud (14).

## Patentansprüche

1. Einsatzhalter mit einem blattförmigen Körper (1) mit einem Schlitz (2) zur Aufnahme eines Schneideinsatzes (3), wobei dieser Schlitz (2) durch einen elastisch flexiblen Arm (4) begrenzt ist, der so angeordnet ist, daß er den Schneideinsatz in dem Schlitz elastisch festklemmt, zwei Sitzen (6, 7), die seitlich offen sind und einer in dem Einsatzhalter in dem Klemmarm (4) und der andere in dem Körper (1) vorgesehen ist, wobei diese Sitze so angeordnet sind, daß sie zwei voneinander beabstandete Vorsprünge (13, 14; 13', 14') eines Schlüssels aufnehmen und wobei die Vorsprünge die Funktion haben, den Klemmarm nach außen zu biegen und den Schlitz in Verbindung mit dem Befestigen oder Lösen des Schneidaufsatzes aufweiten, genauer durch Drehen des Schlüssels um einen Drehpunkt, der durch einen der Sitze (6) definiert ist, und ein Vorsprung (13, 13') des Schlüssels in den Sitz (6) eingreift, während gleichzeitig der andere Vorsprung (14, 14') in den anderen Sitz (7) eingreift, **dadurch gekennzeichnet, daß** dieser andere Sitz (7) eine längliche Form hat, um ein Auswärtsbiegen des Klemmarms (4) durch Verschieben des anderen Vorsprungs (14, 14') des Schlüssels von einem Punkt in einem bestimmten Abstand von dem ersten Sitz (6) zu einem anderen Punkt in einem kürzeren Abstand von dem ersten Sitz (6) zu bewirken.

2. Einsatzhalter nach Anspruch 1, **dadurch gekennzeichnet, daß** der längliche Sitz (7) eine Vertiefung (10) an einem Punkt in einem kürzeren Abstand von dem ersten Sitz (6) hat, wobei der andere Vorsprung (14, 14') in dieser Vertiefung (10) gehalten wird, wenn der Schaft (12) des Schlüssels zu einer aktiven Stellung gedreht wird, wo der Klemmarm nach außen gebogen wird.

3. Einsatzhalter nach Anspruch 1 oder 2, **dadurch gekennzeichnet, daß** der längliche Sitz (7) in dem Körper (1) eingelassen ist, während der den Drehpunkt definierende Sitz (6) in dem Klemmarm (4) eingelassen ist.

4. Einsatzhalter nach einem der vorausgehenden Ansprüche, **dadurch gekennzeichnet, daß** der längliche Sitz (7) seine beiden entgegengesetzten Enden in unterschiedlichen Abständen von dem Sitz hat, der als Drehpunkt dient.

5. Schlüssel zur Verwendung, um einen Schneideinsatz in einem Schlitz in einem Einsatzhalter der Art befestigen und/oder daraus lösen zu können, der einen blattförmigen Körper (1) einschließt, der Schlüssel einen Schaft (12) mit zwei axial voneinander beabstandeten Vorsprüngen (13, 14; 13', 14') hat, ein erster Vorsprung (13', 14) nahe einem freien Ende des Schaftes angeordnet ist und ein zweiter Vorsprung (13, 14') axial von dem ersten Vorsprung beabstandet ist und der Abstand zwischen den Vorsprüngen größer als 1/10 und kleiner als 1/3 der Gesamtlänge des Schaftes ist, **dadurch gekennzeichnet, daß** der Vorsprung (13, 13'), der dazu bestimmt ist, als der Drehpunkt zu wirken, die Form eines zylindrischen Ansatzes hat, während der andere Vorsprung (14, 14') die Form eines Ansatzes mit einem ovalen Querschnitt hat.

6. Schlüssel nach Anspruch 5, **dadurch gekennzeichnet, daß** entgegengesetzte Paare von Vorsprüngen an dem Schaft vorgesehen sind, nämlich an einer Seite ein Paar in der Form eines zylindrischen Ansatzes (13') am nächsten dem freien Ende des Schaftes und eines ovalen Ansatzes (14') in einem Abstand von dem zylindrischen Ansatz (13') und an der anderen Seite ein Paar in der Form eines ovalen Ansatzes (14) am nächsten dem freien Ende des Schaftes und eines zylindrischen Ansatzes (13) in einem Abstand von dem ovalen Ansatz (14).

## Revendications

1. Porte-plaquette comprenant un corps en forme de lame (1) comportant une fente (2) conçue pour recevoir une plaquette de coupe (3), ladite fente (2) étant définie par un bras élastiquement souple (4) agencé pour serrer de façon élastique la plaquette de coupe dans la fente, deux sièges (6, 7), qui s'ouvrent latéralement, étant prévus dans ledit porte-plaquette, l'un dans le bras de serrage (4) et l'autre situé dans le corps (1), lesdits sièges étant agencés pour recevoir deux saillies espacées (13, 14 ; 13', 14') d'une clé, lesdites saillies ayant pour fonction de plier le bras de serrage vers l'extérieur et d'élargir la fente relativement au montage ou démontage de la plaquette de coupe, plus précisément en tournant la clé autour d'un point d'articulation défini par l'un des sièges (6) et une saillie (13 ; 13') de la clé se mettant en prise avec le siège (6) en même temps que l'autre saillie (14, 14') vient en prise avec l'autre siège (7), **caractérisé en ce que** ledit autre siège (7) présente une forme oblongue de manière à effectuer une flexion vers l'extérieur du bras de serrage (4) en déplaçant l'autre saillie (14, 14') de la clé depuis un point situé à une certaine distance par rapport au premier siège (6) vers un autre point situé à une distance plus courte par rapport audit premier siège (6).

2. Porte-plaquette selon la revendication 1, **caractérisé en ce que** le siège oblong (7) présente un évidement (10) en un point situé à une distance raccourcie du premier siège (6), ladite autre saillie (14, 14') étant maintenue dans ledit évidement (10) lorsque l'axe (12) de la clé est tourné vers une position active à laquelle le bras de serrage est plié vers l'extérieur.

3. Porte-plaquette selon la revendication 1 ou 2, **caractérisé en ce que** le siège oblong (7) est creusé dans le corps (1), tandis que le siège définissant le point d'articulation (6) est creusé dans le bras de serrage (4).

4. Porte-plaquette selon l'une quelconque des revendications précédentes, **caractérisé en ce que** le siège oblong (7) a ses deux extrémités opposées situées à des distances différentes par rapport au siège servant de point d'articulation.

5. Clé devant être utilisée pour permettre le montage et/ou le démontage de la plaquette de coupe dans une fente dans un porte-plaquette du type comprenant un corps en forme de lame (1), ladite clé comprenant un axe (12) présentant deux saillies axialement espacées (13, 14 ; 13', 14'), une première saillie (13', 14) étant située à proximité d'une extrémité libre de l'axe et une seconde saillie (13, 14') étant axialement espacée de ladite première saillie, et la distance entre les saillies étant supérieure à 1/10 et inférieure à 1/3 de la longueur entière de l'axe, **caractérisée en ce que** la saillie (13, 13') conçue pour agir en tant que point d'articulation présente la forme d'un ergot cylindrique, tandis que l'autre saillie (14, 14') présente la forme d'un ergot présentant une section transversale ovale.

6. Clé selon la revendication 5, **caractérisée en ce que** les paires opposées de saillies sont disposées sur l'axe, à savoir, située au niveau d'un premier côté, une paire suivant la forme d'un ergot cylindrique (13') le plus proche de l'extrémité libre de l'axe et d'un ergot ovale (14') à une distance dudit ergot cylindrique (13') et, située de l'autre côté, une paire suivant la forme d'un ergot ovale (14) le plus proche de l'extrémité libre de l'axe et d'un ergot cylindrique (13) à une distance par rapport audit ergot ovale (14).
